# EUROPEAN PATENT SPECIFICATION

(11) **EP 4 680 017 B1**
(45) Date of publication and mention of the grant of the patent: **04.11.2026**
(21) Application number: 24704676.6
(22) Date of filing: 05.02.2024
(51) Int. Cl.: A01K 15/02, A63B 22/02

(54) **HYDROTHERAPY TUB**
HYDROTHERAPIEWANNE
CUVE D'HYDROTHÉRAPIE

(30) Priority: 13.03.2023 CZ 20230096
(43) Date of publication of application: 21.01.2026
(73) Proprietor: Vettronic S.r.o., 746 01 Opava (CZ)
(72) Inventor: MARSAN, Zdenek, 38001 Dacice (CZ); SYKORA, David, 74753 Jakartovice 7 (CZ)
(74) Representative: Sedlák, Jirí
(86) International application number: PCT/CZ2024/050008
(87) International publication number: WO 2024/188380

(56) References cited:
- EP-A2- 3 912 462
- WO-A1-2018/056912
- US-B1- 7 241 250

## Description

### Field of the Invention

The technical solution relates to a hydrotherapy tub designed primarily for hydrotherapy of four-legged animals, i.e. for veterinary care and veterinary medicine.

### Background of the Invention

Hydrotherapy is one of frequently used therapeutic but also training procedures allowing to use two of the basic properties of liquids, in this case especially water. These properties are buoyancy and density. Hydrostatic buoyancy resulting from gravitational force results in different sized bodies being floated by the liquid. This phenomenon and its physical laws are described in Archimedes' law, which states that a body immersed in a liquid that is at rest is buoyed up by a force equal to the weight of the fluid of the same volume as the submerged part of the body. While buoyancy can therefore be understood as an advantage, the density of water is an obstacle, because anything that is denser than air but does not have a fixed consistency creates a natural resistance for the body moving through it.

The buoyancy thus allows to lighten the body of the animal, which is immersed in the hydrotherapy tub, thus reducing the burden on the limbs and spine when training their movement. When walking, the limbs are not fully strained, as is the case in a normal environment. By contrast, water resistance forces the animal to exert more force during walking to ensure a forward movement, which strengthens the muscular apparatus.

From technical practice we know many types of hydro-massage, rehabilitation and similarly named devices and equipment provided with a watertight tank with water supply and drainage. Such tanks generally consist of a frame fitted with a watertight floor and side walls, wherein some or all of which may be formed as transparent or translucent, i.e. a frame with a transparent or translucent infill fitted to the frame in a watertight way.

Document EP 1850825 B1 describes a hydrotherapy apparatus consisting of a tank containing at least one door operable between the open and closed states to provide access to the apparatus. The door is fixed with hinges and secured in the closed position by a locking mechanism. Document EP 3903757 describes a hydrotherapy device consisting again of a tank, but in this case provided with a pair of watertight opposite entrances, opening downwards and forming boarding ramps when reclined. In the tank, there is a conveyor belt operating similarly to a treadmill, but without a separate drive so that the belt is set in motion by animal walking.

Document DE 20313036 U describes a conveyor belt drive consisting of an internal electric motor. The tank is designed as a two-part tank, wherein one part, which is fully separated from the other part, forms a tank with a belt for accommodating the animal and the other part is a water reservoir for supplying water to the first part of the tank. Similar to this document, in Document US 4944506, the tank for accommodating the animal is supplied with water from a reservoir into which water is pumped after the exercise is completed before the animal is released from the tank. Exercise equipment, as the tank with the conveyor belt is called here, is provided with a filtration device with water heating, which allows continuous filtration and heating of water throughout the exercise.

In Document GB 2538728, the hydrotherapy equipment is additionally provided with sensors to monitor the weight change of the animal during exercise and hydromassage nozzles. In Document US 20190134458, the tank is provided with a transit chamber allowing dry entry and exit from the exercise chamber.

Document EP3912462 describes a hydrotherapy device consisting of a tank with a pair of oppositely arranged side entrances or doors that open laterally, wherein both entrances are provided with an entrance ramp. In this embodiment, the conveyor or also the conveyor belt is provided with a self-drive at one of its ends to drive the belt. The belt is arranged so that it can be tilted from one side to create an inclined plane that makes forward movement difficult, imitating walking uphill. However, a motion device for vertical movement of the belt to the inclined plane may cause a risk of jamming in short-term unevenness. The belt can be disconnected from the fit on the side where the drive is not arranged and lifted manually so that the underside of the belt is also accessible, but only if the tank is without water.

The existence of a hydrotherapy tub is known from Document CN 208784990 U. The hydrotherapy tub includes a waterproof tank and a conveyor with moving cylinders at the bottom of the tank. Furthermore, the conveyor is provided with struts and suspended from the frame of the hydrotherapy tub by means of four cables, the movement of which is synchronously carried out at least in pairs by means of a motor and pulleys as cable guides. The connection of cables and the conveyor is detachable.

From Document WO 2018056912, a treadmill consisting of a belt placed in a tank is known. The treadmill is lifted between the bottom and the top of the tank on four drives, consisting of threaded rods. The belt is adapted for side lifting but always synchronously by one side, i.e. not independently. The belt drive is adapted for underwater mounting, thus it is either waterproof or in a waterproof enclosure.

The main disadvantage of existing solutions is that the conveyor belt is tiltable only unilaterally and has a precisely preselected horizontal plane. The water level can thus only be regulated by removing and adding liquid from/to the tank. The reason for this is that the belt drive consists of an electric motor that is not adapted for underwater operation. This can cause the greatest problems when creatures of different size, i.e. shorter height, use the device. In addition, tilting the platform to the position where the belt can also be accessed from the underside is possible only manually, in a state where the tank is without water.

Thus, the task of the invention is to create a hydrotherapy tub that will reflect all the advantages of the equipment according to the state of the art in its construction, and moreover will also improve this state. According to the new solution, the hydrotherapy tub should allow vertical movement of both ends of the conveyor belt independently of each other. Thus, the conveyor belt must be able to work in a position further from the bottom when it is completely submerged in water. Vertical movement devices shall be capable of such movement without risk of jamming, even under load from the animal. The position of the conveyor belt should allow the belt to be lifted to an ideally perpendicular position during unilateral fixation, for easy access to the underside of the belt but also to the bottom of the tank for system, cleaning, maintenance, and repair needs.

### Summary of the Invention

The shortcomings of currently known hydro-massage, hydrotherapy and hydro-motion devices are overcome by the hydrotherapy tub described in the patent. This hydrotherapy tub is multifunctional. It is therefore intended not only for hydrotherapy but also for training four-legged animals. The hydrotherapy tub consists of a top-open waterproof tank, which is used to place the animal in the water bath. The hydrotherapy tub also consists of a conveyor. The supporting base of the tank is the support frame, which is provided with a bottom and four walls, so the tank is open from the top. At least one of the tank walls forms an opening door. The conveyor is in its basic position arranged at the bottom of the tank and is fixed to the tank support frame. The conveyor consists of a frame, motion rollers and a conveyor belt arranged between the motion rollers. A driving motion roller is arranged at one end of the frame, and a tensioning motion roller is arranged on the opposite side of the frame. The conveyor is suspended using four rods with independent linear drives. These rods are demountably attached to the support frame of the tank at its top.

The rods are demountably connected to the conveyor. This achieves that in the process of the hydrotherapy tub operation, the conveyor is firmly carried on one side and can simultaneously move up and down independently so that only the conveyor front side or only the conveyor rear side or simultaneously both sides can move independently, but the movement of the individual sides can also be opposite and at different rate. On the other hand, the conveyor can be unilaterally detached from the respective rods with its front side and lifted, or the conveyor can be detached in all its hinges and removed from the hydrotherapy tub after disconnecting it from the mains. However, tilting is possible even when there is water in the tank, but removal is preferable when the tank is empty, or the hydrotherapy tub is disconnected from the mains.

In a preferred embodiment, the driving motion roller is provided with an internal drum motor adapted for underwater operation. This drum motor is provided with an integrated gearbox. The drum motor with this integrated gearbox can thus be a part of a motion cylinder without the need to use external gear groups to transfer traction forces and complex sealing of these external gear groups.

In another preferred embodiment, the conveyor is provided with a pair of gas struts. These struts are symmetrically arranged from the side of the conveyor, wherein one end is fixed to the bottom and the other to the conveyor. The struts are used for easier lifting the conveyor front side after it has been disconnected from respective rods to the upward position. This allows cleaning of the conveyor also from the underside and/or the bottom and wall of the tank in the space that is in the working position of the conveyor under the conveyor.

In the following preferred embodiment, the linear actuator is an electric actuator. This electric actuator is adapted for underwater operation and consists of a trapezoidal threaded rod.

In a further preferred embodiment, the opening door is arranged in the support frame in a hinged outward manner. The opening door consists of two horizontally arranged longitudinal crossbars and two vertically arranged crossbars with a transparent window to show what is happening inside the tank and how the animal moves. In this preferred embodiment, the opening door is fixed to the support frame by hinges arranged in at least a pair between the lower longitudinal crossbar and the support frame. In the closed state of the opening door, these are anchored in the support frame by a pair of lever latches arranged on the support frame so that the anchoring of the closed position of the opening door is located using one lever latch at the top of each crossbar.

In the following preferred embodiment, the hydrotherapy tub also consists of an extendable platform. This extendable platform is arranged under the tank in the retracted position and the extendable platform extends along its longitudinal side. In addition, the hydrotherapy tub also consists of a support system consisting of at least four levelling supports anchored from the outside to the support frame under the tank bottom.

The main advantage of the hydrotherapy tub according to the present invention is that it allows vertical movement of both ends of the conveyor belt, both ends independently of each other. The conveyor belt is capable of operation in a position further from the bottom when it is completely submerged in water. Rods providing vertical movement are capable of this movement without the risk of jamming, even under the load from the animal. The position of the conveyor belt allows the belt to be lifted to an almost ideally perpendicular position during unilateral fixation, for easy access to the underside of the conveyor belt but also to the bottom of the tank for cleaning, maintenance and repair of the hydrotherapy tub and conveyor belt.

### Brief Description of the Drawings

The invention will be explained in more detail by means of the drawings which illustrate:
- Fig. 1: side view of hydrotherapy tub with retracted extendable platform. The hydrotherapy tub is filled with water, in which a dog is placed,
- Fig. 2: top plan view of hydrotherapy tub with extended extendable platform,
- Fig. 3: side section of hydrotherapy tub with conveyor in basic position at bottom of tank,
- Fig. 4: side section of hydrotherapy tub with conveyor in middle raised position,
- Fig. 5: side section of hydrotherapy tub with conveyor having conveyor rear side at bottom of tank and conveyor front side in middle raised position,
- Fig. 6: side section of hydrotherapy tub with conveyor having conveyor front side at bottom of tank and conveyor rear side in middle raised position,
- Fig. 7: side section of hydrotherapy tub with conveyor having conveyor rear side at bottom of tank and conveyor front side in full lifted position after disconnecting conveyor front side from rods.

### Examples of Invention Embodiments

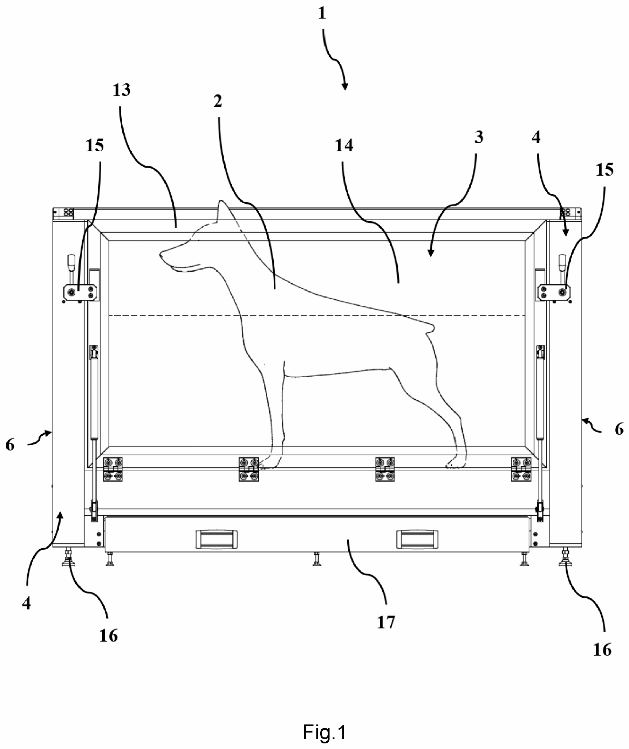

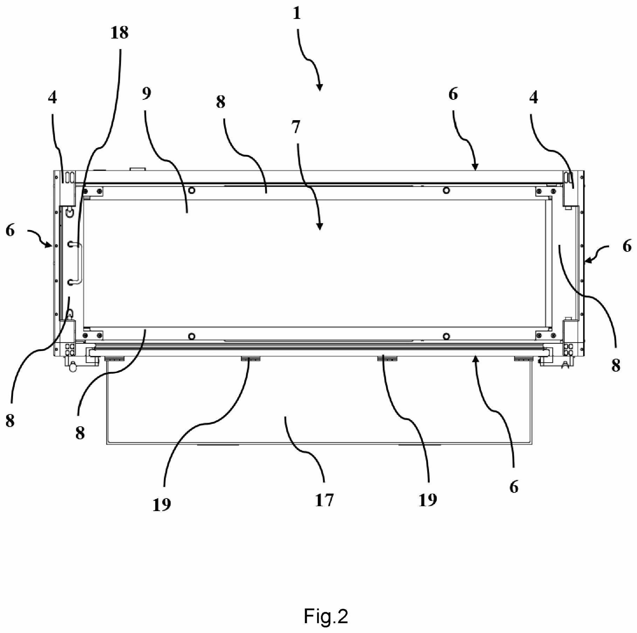

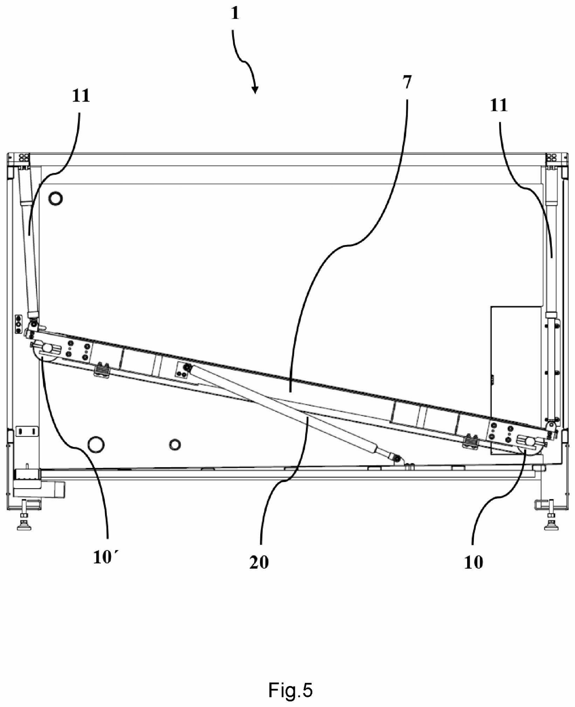

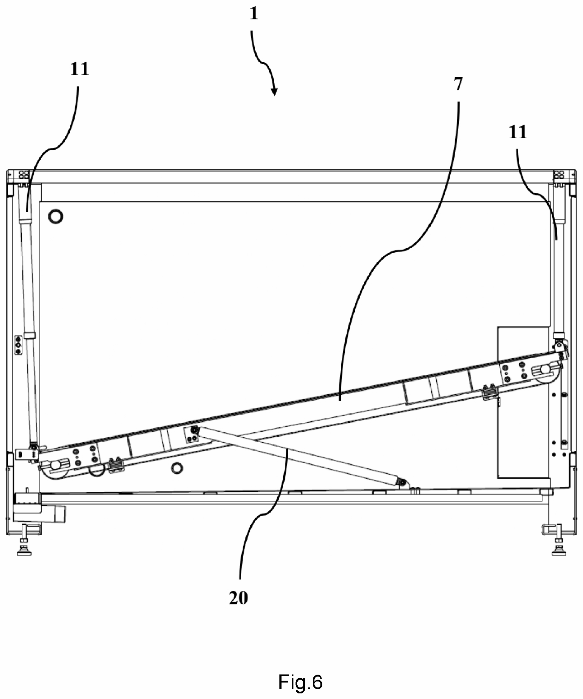

The hydrotherapy tub 1, as shown in Figures 1 to 7, is based on the structural foundations of similar technical equipment but significantly improves this design with new elements that improve the functional use of the hydrotherapy tub 1 and facilitate its maintenance and repair.

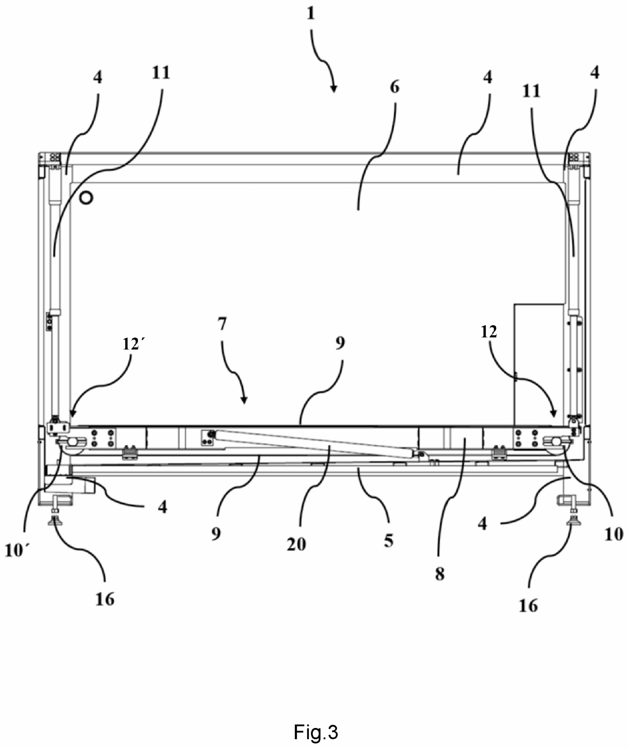

The hydrotherapy tub 1 consists of a top-open waterproof tank 3, which is used to accommodate the animal in the water bath. This hydrotherapy tub 1 also consists of a conveyor 7. The supporting base of the tank 3 is the support frame 4, which is provided with a bottom 5 and four walls 6, so the tank 3 is open from the top. At least one of the walls 6 of the tank 3 forms an opening door 13. As shown in Fig. 3, the conveyor 7 is arranged in its basic position at the bottom 5 of the tank 3 and is fixed to the support frame 4 of the tank 3. The conveyor 7 consists of a frame 8, motion rollers 10, 10' and a conveyor belt 9 arranged between motion rollers 10, 10' on which conveyor belt the training or rehabilitating animal 2 moves in the water bath. Training and rehabilitation is based on movement in a water bath where the temperature, water depth and inclination of the conveyor belt 9 can be controlled. A driving motion roller 10 is arranged at one end of the frame 8 of the conveyor 7 and a tensioning motion roller 10' is arranged at the other end of the frame 8 of the conveyor 7. The conveyor 7 is suspended inside the tank 3 by means of four rods 11, which are provided with independent linear drives. These rods 11 are demountably attached to the support frame 4 of the tank 3, namely in its inner upper part, more precisely in its upper inner corners.

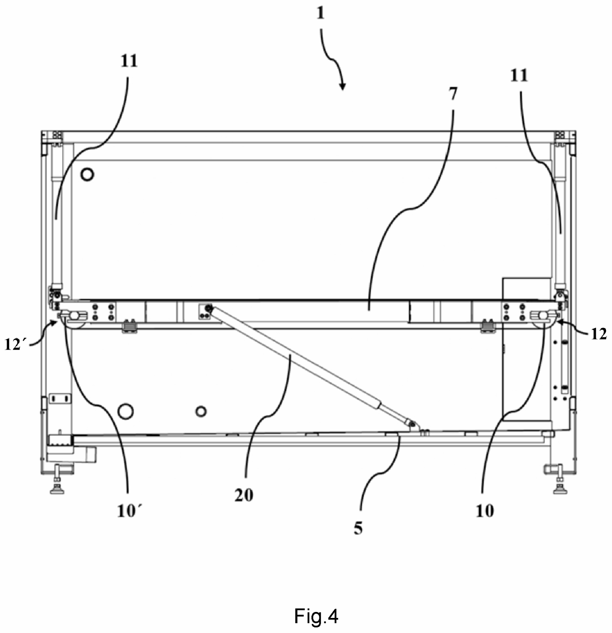

According to a particular example of the preferred embodiment shown in Figures 3 and 4, a driving motion roller 10 is arranged on the front side 12 of the conveyor 7 and a tensioning motion roller 10' is arranged on the rear side 12' of the conveyor 7.

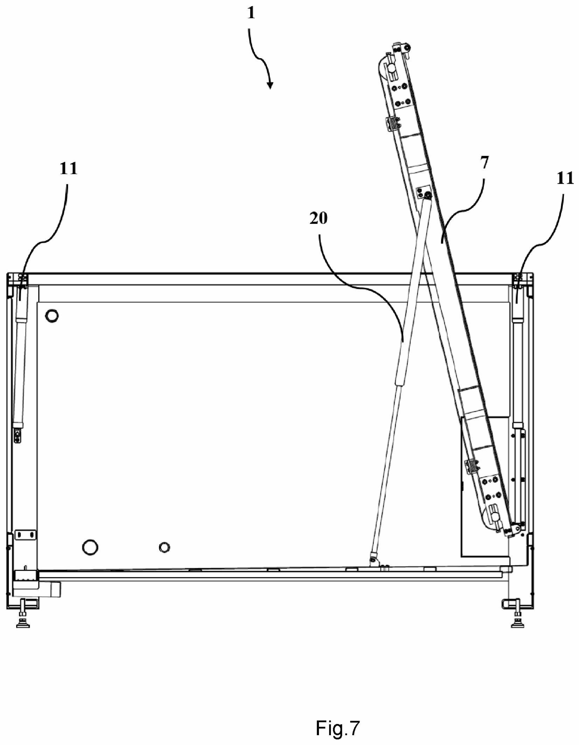

According to the example of the embodiment shown in part in Fig. 7, the rods 11 are demountably connected to the conveyor 7. This achieves the effect that, in the process of operating the hydrotherapy tub 1, the conveyor 7 is firmly carried on one side by the support frame 4 of the tank 3, but at the same time this conveyor 7 can move up and down in the tank 3, as shown in Figures 3 to 6. This vertical movement of the conveyor 7 using rods 11 takes place laterally independently, i.e. the movement of a pair of rods 11 fixed on the front side 12 of the conveyor 7 is independent of the movement of a pair of rods 11 fixed on the rear side 12'of the conveyor 7. Only the front side 12 of the conveyor 7 or only the rear side 12' of the conveyor 7 moves vertically in a synchronous motion. At the same time, it is possible for both sides 12, 12' of the conveyor 7 to move in a vertical direction simultaneously, but also for the movement of individual sides 12, 12' to be opposite or at a different rate. If necessary, the conveyor 7 can be unilaterally detached without draining the tank 3. More precisely, its front side 12 is detached from the respective rods 11 and the conveyor can then be lifted upwards as shown in Fig. 7. For better handling during lifting, the conveyor 7 is provided with a handle 18 from above on its front side 12. The conveyor 7 can be disconnected in all its hinges and completely removed according to the example of embodiment not shown. The total removal must be carried out with the tank 3 empty and the hydrotherapy tub 1 disconnected from the mains.

According to another example of the embodiment not shown, the driving motion roller 10 is provided with an internal drum motor with an integrated gearbox adapted for underwater operation. The drum motor can thus be part of the driving motion roller 10 without the need to use external gear groups to transfer traction forces and the complex sealing of these external gear groups. It is the complexity of the transmission of propulsion forces, combined with electrical safety, that is the reason why conveyors 7 are commonly designed for similar equipment as a component that is not completely submerged in water and rather forms the bottom 5 of the tank 3.

Lifting the conveyor 7 to a vertical position around its rear side 12' would be physically demanding even with the use of the handle 18. Therefore, the conveyor 7 is provided with a pair of gas struts 20. These gas struts 20 are symmetrically arranged from the side of the conveyor 7, wherein one end is fixed to the bottom 5 and the other to the conveyor 7. The gas struts 20 are used for easier lifting of the front side 12 of the conveyor 7 after it has been disconnected from the respective rods 11 up to the upward position. This makes it possible to clean the conveyor 7 also from the underside and/or the bottom 5 and walls 6 of the tank 3 in a space normally inaccessible in the working position of the conveyor 7. A person skilled in the art will be able to easily infer from technical practice other technical elements that are able to replace the gas struts 20 and meet the required lifting effect.

According to the example of the embodiment not shown, the linear actuator arranged inside the rod 11 is an electric actuator, i.e. an electric motor extending and retracting parts of the rod 11 by moving the threaded rod with a trapezoidal thread. A person skilled in the art will be able to find other ways to achieve the same effect with the help of other similar technical elements.

In order to conveniently place an animal 2 in the tank 3, the opening door 13 is arranged in a hinged manner in the support frame 4 and hinges outwards from the tank 3. The opening door 13 consists of two horizontally arranged longitudinal crossbars and two vertically arranged crossbars assembled into one profile, which is filled with a transparent window 14 so that the naked eye can see what is happening inside the tank 3. Similarly, one or more other walls 6 of the tank 3 may be fitted with the window 14. The opening door 13, according to this example of the embodiment shown in Fig. 1, is fastened to the support frame by hinges 19 arranged in at least a pair between the lower longitudinal crossbar and the support frame 4. In the closed state, the opening door 13 is anchored in the support frame by a pair of lever latches 15 arranged on the supporting frame 4 so that the anchoring of the closed position of the opening door 13 is located using one lever latch 15 at the top of each crossbar. The design of the tank 3 also allows for the design with tilting of other walls 6, but this arrangement does not offer any further substantial advantages.

In order to be able to enter the tank 3 comfortably, even though it is relatively high above the floor level, and to work better with the tank, the hydrotherapy tub 1 is provided with an extendable platform 17, replacing the stairs and allowing the operator of the hydrotherapy tub 1 to move better at the tilting point of the door 13. This extendable platform 17 is in its retracted position arranged under the tank 3 and extends along its longitudinal side with the door 13. In addition, the hydrotherapy tub 1 also consists of a support system consisting of at least four levelling supports 16 anchored from the outside to the support frame 4 under the bottom of the tank 3.

### Industrial Applicability

The invention finds application in animal care, i.e. as a means for carrying out water therapy of four-legged animals and their active training.

### List of reference signs used in the drawings

- 1: hydrotherapy tub
- 2: animal
- 3: tank
- 4: hydrotherapy tub support frame
- 5: bottom
- 6: wall
- 7: conveyor
- 8: conveyor frame
- 9: conveyor belt
- 10: driving motion roller
- 10': tensioning motion roller
- 11: rod
- 12: conveyor front side
- 12': conveyor rear side
- 13: door
- 14: window
- 15: lever latch
- 16: levelling support
- 17: extendable platform
- 18: handle
- 19: hinge
- 20: gas strut

## Claims

1. A hydrotherapy tub (1) designed primarily for hydrotherapy and training of four-legged animals (2) consisting of a top-opened waterproof tank (3) adapted to accommodate the animal in a water bath and a conveyor (7), the tank (3) being formed by a support frame (4) with a bottom (5) and four walls (6) of which at least one wall (6) forms an opening door (13), the conveyor (7) being in its basic position arranged at the bottom of the tank (3), being fixed to the support frame (4) of the tank (3) and consisting of a frame (8), motion rollers (10, 10') and a conveyor belt (9) arranged between the motion rollers (10, 10'); wherein at one end of the frame (8), a driving motion roller (10) is arranged and on the opposite side of the frame (8), a tensioning motion roller (10') is arranged, and the conveyor (7) is suspended in the tank (3) by hinges, **characterized in that** the hinges are formed by four rods (11) with independent linear drives, wherein the rods (11) are attached to the support frame (4) of the tank (3) at its top and each linear drive is watertightly arranged inside a respective rod (11), and wherein the rods (11) are demountably attached to the conveyor (7).

2. The hydrotherapy tub (1) according to claim 1, wherein the driving motion roller (10) is provided with an internal drum motor adapted for underwater operation.

3. The hydrotherapy tub (1) according to claim 1 and 2, wherein the conveyor (7) is provided with a pair of gas struts (20) for easier lifting of the conveyor (7) to the upward position when the rods (11) are disconnected from a front side (12) of the conveyor (7) from the suspension.

4. The hydrotherapy tub (1) according to at least any of claims 1 to 3, wherein each linear drive is an electric actuator adapted for underwater operation consisting of an electric motor and a trapezoidal thread connected to this electric actuator.

5. The hydrotherapy tub (1) according to at least any of claims 1 to 4, wherein the opening door (13) is arranged in the support frame (4) in a hinged manner, the opening door (13) is formed of two horizontally arranged longitudinal crossbars and two vertically arranged crossbars with a transparent window (14), the opening door (13) is fixed to the support frame (4) by hinges (19) arranged between the lower longitudinal crossbar and the support frame (4), and in the closed state of the opening door (13), these are anchored in the support frame (4) by a pair of lever latches (15) arranged on the support frame (4) so that the anchoring of the closed position of the opening door (13) is located using one lever latch (15) at the top of each crossbar.

6. The hydrotherapy tub (1) according to any of claims 1 to 5, wherein it further consists of an extendable platform (17) arranged under the tank (3) and a support system consisting of at least four levelling supports (16).

## Patentansprüche

1. Eine Hydrotherapiewanne (1), die vorwiegend für die Hydrotherapie und das Training von vierbeinigen Tieren (2) konzipiert ist und aus einem wasserdichten Becken (3), das oben offen ist und zur Aufnahme eines Tieres in einem Wasserbad geeignet ist, sowie aus einer Fördereinrichtung (7) besteht, wobei das Becken (3) durch einen Tragrahmen (4) mit einem Boden (5) und vier Wänden (6) gebildet ist, von denen mindestens eine Wand (6) eine zu öffnende Tür (13) bildet, und wobei die Fördereinrichtung (7) in ihrer Grundstellung am Boden des Beckens (3) angeordnet und am Tragrahmen (4) des Beckens (3) befestigt ist sowie aus einem Rahmen (8), Antriebsrollen (10, 10') und einem zwischen den Antriebsrollen (10, 10') angeordneten Förderband (9) besteht, wobei an einem Ende des Rahmens (8) eine Antriebsrolle (10) und an der gegenüberliegenden Seite des Rahmens (8) eine Spannrolle (10') angeordnet ist und die Fördereinrichtung (7) mittels Aufhängungen im Becken (3) aufgehängt ist, **dadurch gekennzeichnet, dass** die Aufhängungen aus vier Zugstangen (11) mit unabhängigen Linearantrieben bestehen, wobei die Zugstangen (11) im oberen Bereich mit dem Tragrahmen (4) des Beckens (3) verbunden sind und der Linearantrieb wasserdicht im Inneren der Zugstange (11) angeordnet ist, wobei die Zugstangen (11) lösbar mit der Fördereinrichtung (7) verbunden sind.

2. Hydrotherapiewanne (1) nach dem Anspruch 1, **dadurch gekennzeichnet, dass** die Antriebsrolle (10) mit einem für den Unterwasserbetrieb ausgelegten innenliegenden Trommelmotor ausgestattet ist.

3. Hydrotherapiewanne (1) nach dem Anspruch 1 oder 2, **dadurch gekennzeichnet, dass** die Fördereinrichtung (7) mit einem Paar Gasdruckfedern (20) versehen ist, um das Anheben der Fördereinrichtung (7) in eine angehobene Position zu erleichtern, wenn die Zugstangen (11) von der Aufhängung an der Vorderseite (12) der Fördereinrichtung (7) gelöst werden.

4. Hydrotherapiewanne (1) mindestens nach einem der Ansprüche 1 bis 3, **dadurch gekennzeichnet, dass** es sich bei dem Linearantrieb um einen für den Unterwasserbetrieb ausgelegten elektrischen Antrieb handelt, der aus einem Elektromotor und einer mit diesem elektrischen Antrieb verbundenen Gewindestange mit Trapezgewinde besteht.

5. Hydrotherapiewanne (1) mindestens nach einem der Ansprüche 1 bis 4, **dadurch gekennzeichnet, dass** die zu öffnende Tür (13) schwenkbar im Tragrahmen (4) angeordnet ist, und die zu öffnende Tür (13) aus zwei horizontal angeordneten Längsträgern und zwei vertikal angeordneten Querträgern mit einem transparenten Fenster (14) gebildet ist, wobei die zu öffnende Tür (13) mittels Scharnieren (19), die zwischen dem unteren Längsträger und dem Tragrahmen (4) angeordnet sind, am Tragrahmen (4) befestigt ist, und wobei die zu öffnende Tür (13) im geschlossenen Zustand mittels eines Paars von Hebelverschlüssen (15) am Tragrahmen (4) verankert ist, die derart am Tragrahmen (4) angeordnet sind, dass die Verankerung der Schließstellung der zu öffnenden Tür (13) jeweils einen im oberen Bereich eines jeden Querträgers angeordneten Hebelverschluss (15) umfasst.

6. Hydrotherapiewanne (1) nach einem der Ansprüche 1 bis 5, **dadurch gekennzeichnet, dass** sie ferner eine unter dem Becken (3) angeordnete ausfahrbare Plattform (17) sowie ein aus mindestens vier Nivellierstützen (16) bestehendes Stützsystem umfasst.

## Revendications

1. Baignoire d'hydrothérapie (1) destinée principalement à l'hydrothérapie et à l'entraînement d'animaux quadrupèdes (2), composée d'un bac étanche (3) ouvert par le dessus, ajusté pour y placer l'animal dans un bain d'eau, et d'un convoyeur (7), le bac (3) étant constitué d'un châssis porteur (4) avec un fond (5) et quatre parois (6), dont au moins une paroi (6) forme une porte ouvrante (13) ; le convoyeur (7) est, en position de base, placé au niveau du fond du bac (3), il est fixé au châssis porteur (4) du bac (3) et se compose d'un cadre (8), de rouleaux convoyeurs (10, 10') et d'une bande convoyeuse (9) placée entre les rouleaux convoyeurs (10, 10'), un rouleau d'entraînement (10) étant disposé à une extrémité du cadre (8) et un rouleau tendeur (10') placé sur le côté opposé du cadre (8), et le convoyeur (7) étant suspendu dans le bac (3) à l'aide de suspensions **caractérisées en ce que** les suspensions sont constituées de quatre tirants (11) munis d'entraînements linéaires indépendants, les tirants (11) étant reliés au châssis porteur (4) du bac (3) dans sa partie supérieure et que l'entraînement linéaire est disposé de manière étanche à l'eau à l'intérieur des tirants (11), les tirants (11) étant reliés au convoyeur (7) de manière amovible.

2. Baignoire d'hydrothérapie (1) selon la revendication 1, **caractérisée en ce que** le rouleau d'entraînement (10) est équipé d'un tambour moteur prévu pour fonctionner sous l'eau.

3. Baignoire d'hydrothérapie (1) selon la revendication 1 ou 2, **caractérisée en ce que** le convoyeur (7) est équipé d'une paire de vérins à gaz (20), afin de faciliter le relevage du convoyeur (7) en position verticale lors du désaccouplement des tirants (11) de la face avant (12) du convoyeur (7) et de son système de suspension.

4. Baignoire d'hydrothérapie (1) selon au moins l'une des revendications 1 à 3, **caractérisée en ce que** l'entraînement linéaire est un entraînement électrique prévu pour fonctionner sous l'eau, constitué d'un moteur électrique et d'une tige filetée à filetage trapézoïdal reliée à l'entraînement électrique.

5. Baignoire d'hydrothérapie (1) selon au moins l'une des revendications 1 à 4, **caractérisée en ce que** la porte battante (13) est disposée de manière basculante dans le châssis porteur (4), la porte battante (13) est constituée de deux montants disposés horizontalement et de deux traverses disposées verticalement, avec une vitre transparente (14), la porte battante (13) étant fixée au châssis porteur (4) par des charnières (19) disposées entre le longeron inférieur et le châssis porteur (4) et, lorsque la porte battante (13) est en position fermée, celle-ci étant verrouillée dans le châssis porteur (4) par deux loquets à levier (15) disposés sur le châssis porteur (4) de façon à ce que le verrouillage en position fermée de la porte battante (13) soit assuré par chaque loquet à levier (15) situé dans la partie supérieure de chaque traverse.

6. Baignoire d'hydrothérapie (1) selon l'une des revendications 1 à 5, **caractérisée en ce qu'**elle comprend en outre une plate-forme coulissante (17) placée sous le bac (3) et un système de support constitué d'au moins quatre pieds de mise à niveau (16).
